Europäisches Patentamt

(19) European Patent Office

Office européen des brevets

(11) Publication number: **0 190 009**
**B1**

(12) **EUROPEAN PATENT SPECIFICATION**

(45) Date of publication of patent specification: **27.12.90**

(21) Application number: **86300446.1**

(22) Date of filing: **23.01.86**

(51) Int. Cl.⁵: **C 09 J 5/06, B 65 D 23/08**

(54) Process for applying copolyester barrier layer to polyester container.

(30) Priority: **24.01.85 US 694375**

(43) Date of publication of application:
**06.08.86 Bulletin 86/32**

(45) Publication of the grant of the patent:
**27.12.90 Bulletin 90/52**

(84) Designated Contracting States:
**AT BE CH DE FR GB IT LI NL**

(56) References cited:
**GB-A- 943 878**
**GB-A-2 067 131**
**GB-A-3 271 225**
**US-A-4 323 411**
**US-A-4 342 399**
**US-A-4 398 017**

(73) Proprietor: **OWENS-ILLINOIS PLASTIC
PRODUCTS INC.
One Sea Gate
Toledo Ohio 43666 (US)**

(72) Inventor: **Jabarin, Saleh Abd-El-Karim
2115 Olde Plank Road
Holland Ohio (US)**
Inventor: **Fehn, Gregory Martin
433 N. Northwestern Highway
Barrington Illinois 60010 (US)**

(74) Representative: **Gore, Peter Manson et al
W.P. THOMPSON & CO. Coopers Building
Church Street
Liverpool L1 3AB (GB)**

Courier Press, Leamington Spa, England.

# EP 0 190 009 B1

**Description**

The present invention relates to the preparation of a high barrier container by applying, to the body sidewall portion of a polyester container, a barrier label using a high barrier copolyester adhesive. More particularly, it relates to applying a high barrier copolyester barrier label to a polyester container sidewall by forming a barrier-effective, strong adhesive bond between the label and the container using a high barrier copolyester resin as a bonding agent.

The barrier properties of polyester plastics containers are important. For example, the oxygen permeability may determine the shelf-life of the package if it affects taste, colour and/or other aspects of product quality. For carbonated beverages, the carbon dioxide permeability determines the carbonation loss rate of the container and, therefore, the shelf-life of the product.

Since the introduction of the polyethylene terephthalate (hereinafter referred to as PET) plastics beverage bottle into the market, efforts have been going on to improve the barrier properties of the PET containers, in order to expand the use of PET for the packaging of food, wines, and carbonated beverages in smaller size containers.

Among the different ways of improving the $CO_2$ and $O_2$ permeability of polyester containers are: orientation, heat setting, barrier coatings and barrier labelling.

A barrier label is defined as a label which consists of a low permeation or impermeable material attached with a high barrier adhesive to a plastics container, causing the container to exhibit an improved barrier performance.

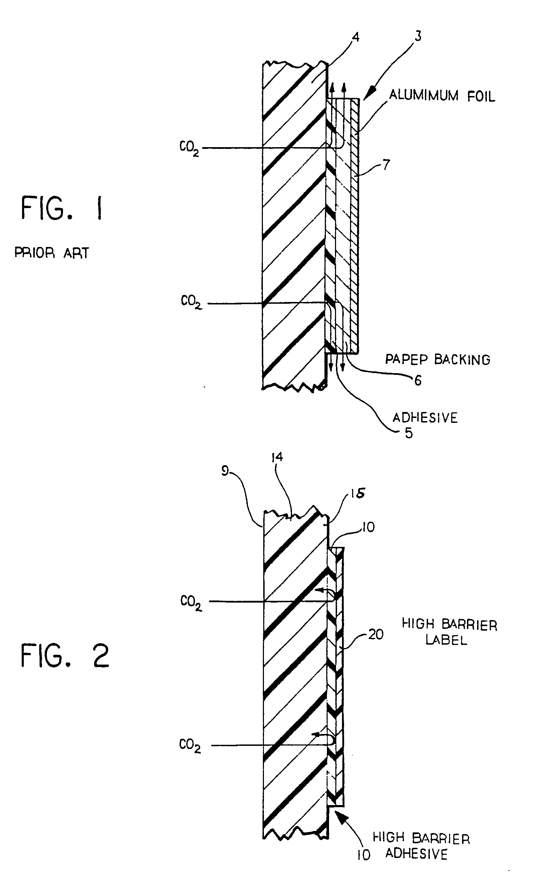

In order to better understand the barrier label concept, reference may be made to the ineffective example of a prior art foil label which is schematically shown in Figure 1, which is more fully described hereinbelow. In this case, for carbonated beverages, the $CO_2$ gas permeates from the inside of the plastics container through the sidewall into the typical adhesive layer and the paper backing; both are poor barriers to $CO_2$. The aluminium foil is impermeable to gases; but the $CO_2$ can go through the adhesive and the paper to the outside.

An effective barrier label example, on the other hand, is shown in Figure 2, which is also more fully described hereinbelow. In this case, the adhesive which bonds the aluminium foil to the sidewall of the container forms a strong bond and it is also a good barrier to $CO_2$. Therefore, as the $CO_2$ permeates from the inside through the bottle sidewall, it slowly reaches the foil and stops. Thus the $CO_2$ gas loss rate is significantly reduced. It should be emphasised that the adhesive should have a bond strength sufficient to withstand the pressure of $CO_2$ gas which can collect between the foil and the adhesive layer. If this bond strength is not sufficient, it can cause blistering and ultimately peeling off of the label.

Barrier labelling intended for use in food packaging must be able to withstand hot fill exposure without peeling off in addition to providing a good oxygen barrier. Current hot melt adhesives used for regular labels are usually activated at low temperatures, in general, less than 70°C, and therefore are not suitable for hot fill and retort applications. Therefore, for a barrier label to be acceptable for carbonated beverage and food applications, the glue or the adhesive must satisfy the following requirements:

1. low permeability to gases especially $CO_2$ and $O_2$;
2. resistance to blistering or detachment due to $CO_2$ force;
3. stability at elevated temperatures so that it can be used for hot filling and retorting;
4. ease in applying the barrier label to the container by a practical commercial method.

The present invention provides methods and materials for producing plastics containers which can practically overcome the problems and meet the requirements identified above for effective barrier labelling. The present invention utilizes high barrier copolyesters as the barrier adhesives. Such copolyester resins can exhibit a wide range of activation temperatures. This makes them suitable for various forming processes such as orientation-blow moulding, orientation blow-moulding-heat setting, extrusion blow moulding and in-mould labelling. High barrier copolyesters are compatible with polyesters, preferably polyethylene terephthalate (PET) and, therefore, the adhesion between PET and the high barrier glue will be strong.

It is possible by means of the present invention to provide a process for producing a high barrier container comprising a hollow polyester or copolyester body with a barrier label effectively applied to its outer sidewall, the process including forming the container by an extrusion blow method, injection blow method, orientation-blow method, or orientation blow-heat set method and applying the barrier label via an "in-mould" technique utilizing a heat-activatable high barrier copolyester resin as the adhesive.

It is also possible by means of the present invention to provide a process and an article produced thereby, in which a high barrier label is applied to a polyester or copolyester container using a heat activated high barrier copolyester material that is provided on the sidewall by utilizing the copolyester material easily and efficiently in production processes including heat-setting, once the container is made or in processes for forming the container including orientation-blow moulding from extruded or injection-moulded parisons, extrusion blow moulding and "in-mould" labelling.

It is further possible by means of the present invention to provide a process for applying a high barrier label to a sidewall of a polyester or copolyester container including a polyethylene terephthalate (PET) beverage bottle using a high barrier copolyester label or other barrier label and adhering the label using a

2

EP 0 190 009 B1

high copolyester resin whose bonding characteristics are activated by heat exposure during the container forming process, and a product made thereby.

The present invention provides a method of producing a high barrier plastics container comprising a barrier label adhered to a hollow polyester container having an outer polyester sidewall surface, the method comprising the steps of:

A. applying a high barrier copolyester adhesive-coated label to the outer polyester sidewall of the container to form a label thereon; and

B. heating the label and container to an appropriate activation temperature to soften the adhesive sufficiently to stick to the polyester wall and form an effective adhesive bond in a boundary area between the label and the wall.

According to the present invention there is provided a method of providing a high barrier plastics label to a hollow polyester container having an outer polyester wall surface characterised by the steps of:

(A) forming a heat activatable, high barrier copolyester adhesive layer on the inside surface of a low permeation labelling film to form a label,

(B) forming a polyester container having a body and an outer polyester wall surface, and

(C) heating the label and container to soften the copolyester layer sufficiently to stick to the polyester wall and form an adhesive bond in a boundary area between the layer and the wall.

The copolyester adhesive layer is desirably activated as the container is blown. Preferably the container is formed by extrusion blow moulding or by injection blow moulding. The high barrier layer may be formed on a parison that is subsequently formed into the container.

The heating of step (B) is preferably at about 100°C to 250°C and both softens the copolyester and simultaneously heat sets the polyester sidewall. Preferably the polyester is polyethylene terephthalate and the copolyester is a reaction product of isophthalic acid, ethylene glycol, and 1,3 bis (2-hydroxyethoxy) benzene. Desirably the polyester sidewall is about 0.375 to 0.75 mm (15 to 30 mls) thick and the polyester is about $2.5 \times 10^{-3}$ to 0.025 mm (1/10 to 1 inch) thick.

In accordance with a first embodiment of the method of the present invention there is provided a method of providing a high barrier plastics label to a sidewall of a body portion of a polyethylene terephthalate container characterised by the steps of:

(A) forming a solid thermoplastic copolyester label around the body sidewall of the container, the label including a copoolyester layer that contacts the sidewall, the copolyester being a reaction product of

(1) a dicarboxylic phthalic acid derivative and

(2) ethylene glycol and 1,3 bis (2-hydroxyethoxy) benzene, the copolyester having an I.V. of at least about 0.6, a glass transition temperature of about 60 to 75°C, an oxygen permeability of about 1 to 6 and a $CO_2$ permeability of about 22.5 to 45 $\times 10^{-12}$ cc-min/cm²-sec-kPa (5 to 10 cc/mil/100 inch² day atmosphere); and

B. heating the label and container to at least about 100°C to soften the label to form an adhesive bond in a boundary area between the label and the container sidewall. In this embodiment, preferably there is the step of forming an outer pervious layer over the copolyester that becomes the outer layer of the label formed around the container.

In accordance with a second embodiment of the method of the present invention there is provided a method of providing a high barrier multilayer plastic label to a hollow biaxially oriented polyethylene terephthalate container having a sidewall around its body portion, characterised in that the label comprises an impervious copolyester layer and a pervious layer suitable for printing indicia thereon; the copolyester being a solid thermoplastic copolyester comprising the polymeric reaction product of

(A) reactant(s) selected form isophthalic acid, terephthalic acid and their $C_1$ to $C_4$ alkyl esters, and any mixture thereof in any proportion,

(B) reactants, 1, 3 bis (2-hydroxyethoxy) benzene plus ethylene glycol, and optionally one or more other ester forming dihydroxy organic hydrocarbon reactant(s), and optionally,

(C) reactant, bis (4-B-hydroxyethoxyphenyl) sulfone, wherein

(1) the amount of the 1,3 bis (2-hydroxyethoxy) benzene is 5 to 90 mol percent of the amount of the (A) reactants,

(2) the combined amount of the (B) and (C) reactants is about 110 to 300 mol percent of the amount of the (A) reactants,

(3) the amount of the other ester forming dihydroxy organic hydrocarbon reactant(s) is zero to 20 mol percent of the amount of the (A) reactants, and

(4) the combined amount of the (C) reactant plus the 1,3 bis (2-hydroxyethoxy) benzene and the other ester forming dihydroxy organic hydrocarbon reactant(s) is not over 90 mol percent of the (A) reactants; the method comprises the steps of:

(a) applying the label to the container sidewall with the copolyester layer next to the container sidewall, and

(b) heating the copolyester layer of the label and sidewall at least about 25°C above the glass transition temperature of the copolyester to soften the copolyester layer and sidewall to form a strong bond therebetween in a boundary layer portion therebetween.

According to the present invention there is also provided a hollow polyester or copolyester container having an outer sidewall surface, characterised by a high barrier copolyester material label bonded to the

3

outer sidewall surface by a boundary layer between the container sidewall and the label being formed by a copolyester layer of the label contacting and adhered to the sidewall surface, the copolyester label material being a reaction product of isophthalic acid, ethylene glycol and 1,3 bis (2-hydroxyethoxy) benzene.

According to the present invention there is further provided a hollow oriented polyethylene terephthalate bottle having a generally cylindrical sidewall with an external surface, characterised by a copolyester label bonded to the sidewall, the label including a copolyester adhesive layer bonded to the sidewall, there being a boundary layer between the sidewall external surface and the label, the copolyester being a solid thermoplastic copolyester which comprises the polymeric reaction product as defined in the second embodiment of the present invention hereinabove.

In a preferred embodiment of the present invention, a high barrier label consisting of a thin low permeation film and a high barrier copolyester adhesive coated thereon is applied to the body portion of an oriented polyethylene terephthalate (PET) container, the container being a beverage bottle with sidewalls of about 0.20 to 0.51 mm (8 to 20 mils) in thickness, the I.V. of the PET being 0.65—0.90.

The present invention will now be further described with reference to, and as illustrated in the accompanying drawings, in which:—

Figure 1 is an enlarged fragmentary sectional view of a label on a container sidewall in accordance with the prior art;

Figure 2 is an enlarged sectional view of a high barrier label adhered to a sidewall of a polyester container using a high barrier copolyester adhesive in accordance with the present invention.

Figure 3 is an elevational view of a PET bottle having a high barrier label attached thereto around its body portion; and

Figure 4 is a perspective view showing a high barrier label coated with a heat-activatable high barrier copolyester adhesive in a blow mould whereby a bottle can be blown against the label in an in-mould process.

Referring now to the drawings, as shown in Figure 1, a low permeation thin film 3, having an aluminium foil layer 7, backed by a paper layer 6, is glued to a container sidewall 4, with a low barrier adhesive layer 5, representing a typical ineffective barrier labelled container of the prior art.

An effective barrier labelled container based on the present invention is shown in Figure 2 comprising an oriented polyester bottle 9, with a high barrier label 20, bonded to the outer surface 15 of the bottle sidewall 14, with a high barrier, heat-activated copolyester adhesive layer 10. As for instance, seen in Figure 2, there is a boundary layer or region between the bottle sidewall 14 and the label 20, the external surface 15 and label being strongly bonded together by heat-activating the high barrier copolyester adhesive 10 using a hot mould whose temperature is at least about 100°C, which is above the glass transition temperature ($T_g$) of the adhesive, as well as, of course, the bottle which generally has a lower $T_g$.

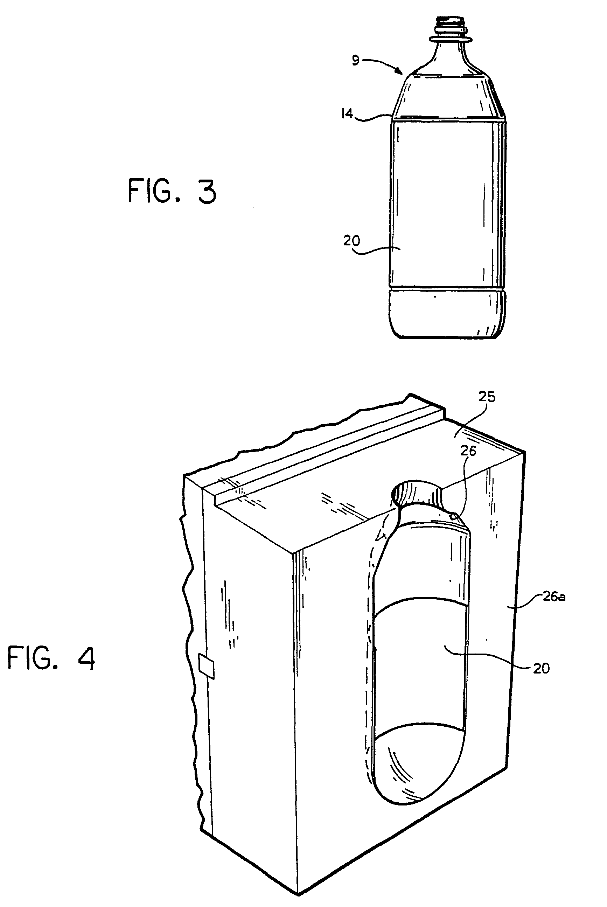

Typically, the barrier label 20 would be decorated via conventional printing on its outer surface to provide a decorated container 9, as shown in Figure 3. Alternatively, the bottle can be provided with a non-barrier (permeable) layer over the label 20, the layer being paper, plastics (generally not oriented) or other printable, easily applied material.

As seen in Figure 4, the barrier label 20 can be inserted into a portion of a blow mould 25 having inner walls 26 whereby a parison is blown into contact with the walls 26 to provide a labelled bottle in an in-mould process.

The polyester container sidewall is generally about 0.25 to 0.75 mm (10 to 30 mils) in thickness, the label of low permeation film coated with high barrier copolyester resin adhesive is usually about 0.025 to 0.15 mm (1 mil to 6 mils) in thickness and preferably about 0.05 to 0.1 mm (2 to 4 mils).

The copolyester is made as described in Example 5 of US—A—4,398,017 which is assigned to the present Applicant.

The present invention may be further described with reference to, but is in no manner limited to, the following Examples.

Example I

Into a 1-liter stainless steel reactor equipped with a stirrer, nitrogen gas inlet port and a condenser, the following were added:

| | |
|---|---|
| 332.3 g | isophthalic acid |
| 180 g | ethylene glycol |
| 59.4 g | 1.3 bis (2-hydroxyethoxy)benzene |
| 0.7209 g | 1.1.1 tris (hydroxymethyl)ethane |
| 0.1100 g | titanyl acetylacetonate |
| 0.1458 g | $Sb_2O_3$ |
| 0.019 g | tetrasodium ethylenediaminetetraacetate |

# EP 0 190 009 B1

The reaction mixture was heated at 220°C for 1 hour, and then at 240°C for 30 minutes under nitrogen atmosphere. Water was continuously distilled out during this period. Then 0.688 g of tris(nonylphenyl) phosphite was added to the mixture in the reactor. The reaction temperature was increased to 250°C and maintained for 40 minutes under nitrogen atmosphere. Then the nitrogen gas flow was stopped and a vacuum of less than 53.3 Pa (0.4 mmHg) was applied. The reaction was continued at 270°C under less than 53.3 Pa (0.4 mmHg) for $4\frac{1}{2}$ hours. The copolyester had an inherent viscosity of 0.82. The glass transition temperature was 60°C. The $O_2$ and $CO_2$ gas permeabilities were 7.2 and 29.7 $\times$ $10^{-12}$ cc-mm/cm$^2$-sec-kPa (1.6 and 6.6 cc/mil/100 in $^{-2}$ day atm), respectively.

One of the main advantages of the present invention is obtained by the use of a high barrier copolyester adhesive which is activated at bottle forming conditions (>90°C) to bond in-mould labels to PET bottles to provide a higher barrier container. The following Table illustrates the activation temperatures for the processes involved.

## TABLE 1

### Activation Temperatures for Copolyester Adhesives

| (Bottle Material) Process | Label Material | Hi-Barrier Copolyester Label Material | Other Label Materials | Bottle Temperature |
|---|---|---|---|---|
| Orientation-Blow | (PET) | <100°C | <100°C | Bottle At 90°—100°C |
| Orientation-Blow/ Heat-Set | (PET) | Not Applicable | <100°C >100°C | Bottle Mold cold 90°—100°C 200°—240°C |
| Injection-Blow or Extrusion-Blow Non-oriented) | (Copolyester) e.g. PET G | Not Applicable | >100°C | Bottle at 150°C—200°C |

As shown in the Table, for orientation-blow moulding, it is possible to use a high barrier heat stable copolyester material as the barrier label film itself in conjunction with a suitable heat activatable high barrier copolyester resin as the bonding agent. In such a case a coextrusion of a heat-stable high barrier copolyester material and a heat-activatable high barrier copolyester resin is prepared and labels of the desired length cut from the coextruded sheet.

The label can be applied to the bottle sidewall by wrapping the label around the bottle, by telescoping a copolyester sleeve label from below the bottle upwardly into place, and by blowing the bottle into a mould with the label located on the inside of the mould in an in-mould process.

The following heat-set Example also illustrates the present invention.

## Example II

The label is inserted into the blow mould and maintained in the appropriate position by applying vacuum. The mould is heated to 230°C for example. The polyester preform or the polyester bottle is blown against the hot mould and kept in contact with the mould to effect heat setting of the polyester container and to activate the barrier label, after which the mould is opened and the bottle is removed and cooled. In this way a strong adhesion exists between the barrier label and the polyester container.

## Claims

1. A method of providing a high barrier plastics label to a hollow polyester container having an outer polyester wall surface characterised by the steps of:

(A) forming a heat activatable, high barrier copolyester adhesive layer on the inside surface of a low permeation labelling film to form a label,

(B) forming a polyester containing having a body and an outer polyester wall surface, and

(C) heating the label and container to soften the copolyester layer sufficiently to stick to the polyester wall and form an adhesive bond in a boundary area between the layer and the wall.

2. A method according to claim 1, wherein the copolyester adhesive layer is activated as the container is blown.

3. A method according to claim 1 or 2, wherein the container is formed by extrusion blow moulding or by injection blow moulding.

4. A method according to any of claims 1 to 3, wherein the high barrier layer is formed on a parison that is subsequently formed into the container.

5

5. A method according to any of claims 1 to 4, wherein the heating of Step (B) is at about 100°C to 250°C.

6. A method according to any of claims 1 to 5, wherein the heating of Step (B) softens the copolyester and simultaneously heat sets the polyester sidewall.

7. A method according to any of claims 1 to 6, wherein the polyester is polyethylene terephthalate and the copolyester is a reaction product of isophthalic acid, ethylene glycol, and 1,3 bis (2-hydroxyethoxy) benzene.

8. A method according to any of claims 1 to 7, wherein the polyester sidewall is about 0.375 to 0.75 mm (15 to 30 mils) thick and the copolyester is about $2.5 \times 10^{-3}$ to 0.025 (1/10 to 1 mil) thick.

9. A method of providing a high barrier plastics label to a sidewall of a body portion of a polyethylene terephthalate container characterised by the steps of:

(A) forming a solid thermoplastic copolyester label around the body sidewall of the container, the label including a copolyester layer that contacts the sidewall, the copolyester being a reaction product of

(1) a dicarboxylic phthalic acid derivative and

(2) ethylene glycol and 1,3 bis (2-hydroxyethoxy) benzene, the copolyester having an I.V. of at least about 0.6, a glass transition temperature of about 60 to 75°C, an oxygen permeability of about 4.5 to 27 $\times$ $10^{-12}$ cc-mm/cm$^2$-sec-kPa (1 to 6 cc/mil/100 inch$^2$ day atmosphere) and a $CO_2$ permeability of about 22.5 to 45 $\times$ $10^{-12}$ cc-mm/cm$^2$-sec-kPa (5 to 10 cc/mil/100 inch$^2$ day atmosphere); and

B. heating the label and container to at least about 100°C to soften the label to form an adhesive bond in a boundary area between the label and the container sidewall.

10. A method according to claim 9 wherein there is the step of forming an outer pervious layer over the copolyester that becomes the outer layer of the label formed around the container.

11. A method of providing a high barrier multilayer plastic label to a hollow biaxially oriented polyethylene terephthalate container having a sidewall around its body portion, characterised in that the label comprises an impervious copolyester layer and a pervious layer suitable for printing indicia thereon; the copolyester being a solid thermoplastic copolyester comprising the polymeric reaction product of

(A) reactant(s) selected from isophthalic acid, terephthalic acid and their $C_1$ to $C_4$ alkyl esters, and any mixture thereof in any proportion,

(B) reactants, 1,3 bis (2-hydroxyethoxy) benzene plus ethylene glycol, and optionally one or more other ester forming dihydroxy organic hydrocarbon reactant(s), and optionally,

(C) reactant, bis (4-B-hydroxyethoxyphenyl) sulfone, wherein

(1) the amount of the 1,3 bis (2-hydroxyethoxy) benzene is 5 to 90 mol percent of the amount of the (A) reactants,

(2) the combined amount of the (B) and (C) reactants is about 110 to 300 mol percent of the amount of the (A) reactants,

(3) the amount of the other ester forming dihydroxy organic hydrocarbon reactant(s) is zero to 20 mol percent of the amount of the (A) reactants, and

(4) the combined amount of the (C) reactant plus the 1,3 bis (2-hydroxyethoxy) benzene and the other ester forming dihydroxy organic hydrocarbon reactant(s) is not over 90 mol percent of the (A) reactants; the method comprising the steps of:

(a) applying the label to the container sidewall with the copolyester layer next to the container sidewall, and

(b) heating the copolyester layer of the label and sidewall at least about 25°C above the glass transition temperature of the copolyester to soften the copolyester layer and sidewall to form a strong bond therebetween in a boundary layer portion therebetween.

12. A hollow polyester or copolyester container having an outer sidewall surface, characterised by a high barrier copolyester material label bonded to the outer sidewall surface by a boundary layer between the container sidewall and the label being formed by a copolyester layer of the label contacting and adhered to the sidewall surface, the copolyester label material being a reaction product of isophthalic acid, ethylene glycol and 1,3 bis (2-hydroxyethoxy) benzene.

13. A hollow oriented polyethylene terephthalate bottle having a generally cylindrical sidewall with an external surface, characterised by a copolyester label bonded to the sidewall, the label including a copolyester adhesive layer bonded to the sidewall, there being a boundary layer between the sidewall external surface and the label, the copolyester being a solid thermoplastic copolyester comprising the polymeric reaction product of

(A) reactant(s) selected from isophthalic acid, terephthalic acid and their $C_1$ to $C_4$ alkyl esters, and any mixture thereof in any proportion,

(B) reactants, 1,3 bis (2-hydroxyethoxy) benzene plus ethylene glycol, and optionally one or more other ester forming dihydroxy organic hydrocarbon reactant(s), and optionally,

(C) reactant, bis (4-B-hydroxyethoxyphenyl) sulfone, wherein

(1) the amount of the 1,3 bis (2-hydroxyethoxy) benzene is 5 to 90 mol percent of the amount of the (A) reactants,

(2) the combined amount of the (B) and (C) reactants is about 110 to 300 mol percent of the amount of the (A) reactants,

EP 0 190 009 B1

(3) the amount of the other ester forming dihydroxy organic hydrocarbon reactant(s) is zero to 20 mol percent of the amount of the (A) reactants, and

(4) The combined amount of the (C) reactant plus the 1,3 bis (2-hydroxyethoxy) benzene and the other ester forming dihydroxy organic hydrocarbon reactant(s) is not over 90 mol percent of the (A) reactants.

**Patentansprüche**

1. Verfahren zum Aufbringen eines hochsperrenden Kunststoffetiketts auf einen hohlen Polyesterbehälter mit einer äußeren Polyesterwandoberfläche, gekennzeichnet durch folgende Schritte:

(A) eine durch Wärme aktivierbare, hoch sperrende Copolyesterklebstoffschicht wird auf der Innenoberfläche eines Aufkleberfilms mit niedriger Durchdringung zur Bildung eines Etiketts gebildet;

(B) ein Polyesterbehälter mit einem Körper und einer äußeren Polyesterwandoberfläche wird gebildet;

(C) das Etikett und der Behälter werden zur genügenden Erweichung der Copolyesterschicht erhitzt, damit diese an der Polyesterwandung klebt und eine Klebstoffverbindung in einem Grenzbereich zwischen dem Etikett und der Behälterseitenwandung bildet.

2. Verfahren nach Anspruch 1, dadurch gekennzeichnet, daß die Copolyesterklebstoffschicht dann aktiviert wird, wenn der Behälter geblasen wird.

3. Verfahren nach Anspruch 1 oder 2, dadurch gekennzeichnet, daß der Behälter durch Extrusionsblasgießen oder Spritzblasgießen erzeugt wird.

4. Verfahren nach einem der Ansprüche 1 bis 3, dadurch gekennzeichnet, daß die hochsperrende Schicht auf einer Wand gebildet wird, die nachfolgend in den Behälter hineingeformt wird.

5. Verfahren nach einem der Ansprüche 1 bis 4, dadurch gekennzeichnet, daß die Erhitzung nach Schritt (B) bei etwa 100 bis 250°C erfolgt.

6. Verfahren nach einem der Ansprüche 1 bis 5, dadurch gekennzeichnet, daß die Erhitzung nach Schritt (B) den Copolyester erweicht und gleichzeitig die Polyesterseiten-wandung durch Wärme aushärten läßt.

7. Verfahren nach einem der Ansprüche 1 bis 6, dadurch gekennzeichnet, daß es sich bei dem Polyester um Polyethylenterephthalat handelt und der Copolyester ein Reaktionsprodukt von Isophthalsäure, Ethylenglycol und 1,3-bis-(2-Hydroxiethoxi)-benzol ist.

8. Verfahren nach einem der Ansprüche 1 bis 7, dadurch gekennzeichnet, daß die Polyesterseitenwandung etwa 0,375 bis 0,75 mm (15 bis 30 mil) dick und der Copolyester etwa $2,5 \times 10^{-3}$ bis 0,025 mm ($\frac{1}{10}$ bis 1 mil) dick ist.

9. Verfahren zum Aufbringen eines hochsperrenden Kunststoffetiketts auf eine Seitenwand eines Körperteils eines Polyethylenterephthalat-Behälters, gekennzeichnet durch folgende Schritte:

(A) es wird ein festes thermoplastisches Copolyester-Etikett um die Körperseitenwandung des Behälters gebildet, wobei das Etikett eine Copolyesterschicht einschließt, welche die Seitenwandung berührt, und der Copolyester ein Reaktionsprodukt von

(1) einem Derivat der Dicarboxyl-phthalsäure und

(2) von Ethylenglycol und 1,3-bis-(2-Hydroxiethoxi)-benzol ist, wobei der Copolyester eine innewohnende Viskosität von mindestens etwa 0.6, eine Glasübergangstemperatur von etwa 60 bis 75°C, eine Sauerstoffdurchlässigkeit von etwa 4,5 bis $27 \cdot 10^{-12}$ mm$^3$/cm$^2$ s kPa (1 bis 6 cc mil/100 Inch$^2$ pro Tag und Atmosphäre) und eine CO$_2$-Durchlässigkeit von etwa 22,5 bis $45 \cdot 10^{-12}$ mm$^3$/cm$^2$ s kPa (5 bis 10 cc mil/ 100 Inch$^2$ pro Tag und Atmosphäre) aufweist, und

(B) das Etikett und Behälter werden auf mindestens 100°C erhitzt, um das Etikett zu erweichen und eine Klebstoffverbindung in einem Grenzbereich zwischen dem Etikett und der Behälterseitenwandung zu bilden.

10. Verfahren nach Anspruch 9, gekennzeichnet durch den Schritt der Bildung einer äußeren durchlässigen Schicht über dem Copolyester, welche die äußere Schicht des um den Behälter geformten Etiketts wird.

11. Verfahren zur Schaffung eines hochsperrenden vielschichtigen Kunststoffetiketts an einem hohlen, zweiachsig gerichteten Polyethylenterephthalat-Behälters mit einer Seitenwand rund um den Körperteil, dadurch gekennzeichnet, daß das Etikett eine undurchlässige Copolyesterschicht und eine durchlässige, für Aufdrucke geeignete Schicht aufweist, wobei der Copolyester ein fester thermoplastischer Copolyester ist und das polymerische Reaktionsprodukt folgende Reaktionspartner aufweist:

(A) Reaktionspartner, ausgewählt aus Isophthalsäure, Terephthalsäure und ihre $C_1$- bis $C_4$-Alkylester sowie jede Mischung hiervon in jedem Verhältnis,

(B) als Reaktionspartner 1,3-bis-(2-Hydroxyethoxi)-benzol plus Ethylenglycol und gegebenenfalls ein oder mehrere andere Ester, welche organische Dihydroxi-Kohlenwasserstoffe bilden und gegebenenfalls

(C) als Reaktionspartner bis-(4-B-Hydroxiethoxiphenyl)-sulfon, worin

(1) der Betrag des 1,3-bis-(2-Hydroxiethoxi)-benzols 5 bis 90 Mol.% des Betrags des (A)-Reaktionspartners ist,

(2) der kombinierte Betrag der Reaktionspartner (B) und (C) ungefähr 110 bis 300 Mol.% des Betrags des (A)-Reaktionspartners ist,

(3) der Betrag der anderen esterbildenden organischen Dihydroxi-Kohlenwasserstoff-Reaktionspartner 0 bis 20 Mol.% des Betrags des (A)-Reaktionspartners ist und

7

(4) der kombinierte Betrag des (C)-Reaktionspartners plus dem 1,3-bis-(2-Hydroxiethoxi)-benzol und der anderen esterbildenden organischen Dihydroxi-Kohlenwasserstoff-Reaktionspartner nicht über 90 Mol.% des (A)-Reaktionspartners liegt, und daß Verfahren folgende Schritte aufweist:

(a) das Etikett wird auf die Behälterseitenwandung mit der Copolyesterschicht nahe der Behälterseitenwand aufgebracht und

(b) die Copolyesterschicht des Etiketts und die Seitenwandung werden auf mindestens etwa 25°C über der Glasübergangstemperatur des Copolyesters erhitzt, um die Copolyesterschicht und die Seitenwandung zu erweichen und eine starke Verbindung zwischen diesen in einem Grenzschichtteil zu bilden.

12. Hohler Behälter aus Polyester oder Copolyester mit einer äußeren Seitenwandung, dadurch gekennzeichnet, daß ein hochsperrender, aus Copolyestermaterial bestehendes Etikett mit der äußeren Seitenwandungsoberfläche über eine Grenzschicht zwischen der Behälterseitenwandung und dem Etikett verbunden ist und daß das Etikett durch eine Copolyesterschicht gebildet wird, welche die Seitenwandungsoberfläche kontaktiert und an dieser anhaftet, und daß das Copolyester-Etikettenmaterial ein Reaktionsprodukt von Isophthalsäure, Ethylenglycol und 1,3-bis-(2-Hydroxiethoxi)-benzol ist.

13. Hohle gerichtete, aus Polyethylenterephthalat bestehende Flasche mit im großen und ganzen zylindrischer Seitenwandung mit einer äußeren Oberfläche, dadurch gekennzeichnet, daß ein Copolyesteretikett mit der Seitenwandung verbunden ist, daß das Etikett eine mit der Seitenwandung verbundene Copolyesterklebstoffschicht aufweist, daß eine Grenzschicht zwischen der äußeren Oberfläche der Seitenwandung und dem Etikett besteht, daß der Copolyester fest und thermoplastisch ist und folgende polymere Reaktionsprodukte aufweist:

(A) Reaktionspartner, ausgewählt aus Isophthalsäure, Terephthalsäure und ihre $C_1$- bis $C_4$-Alkylester und jegliche Mischung in jeder Proportion hiervon,

(B) Reaktionspartner aus 1,3-bis-(2-Hydroxiethoxi)-benzol plus Ethylenglycol und gegebenenfalls ein oder mehrere andere esterbildende organische Dihydroxi-Kohlenwasserstoffe und gegebenenfalls

(C) als Reaktionspartner bis-(4-B-Hydroxiethoxiphenyl)-sulfon, wobei

(1) der Betrag von 1,3-bis-(2-Hydroxiethoxi)-benzols 5 bis 10 Mol.% des Betrags des (A)-Reaktionspartners ist,

(2) der kombinierte Betrag der Reaktionspartner nach (B) und (C) etwa 110 bis 300 Mol.% des Betrags des (A)-Reaktionspartners ist,

(3) der Betrag der anderen esterbildenden organischen Dihydroxi-Kohlenwasserstoff 0 bis 20 Mol.% des Betrags des (A)-Reaktionspartners ist und

(4) der kombinierte Betrag des (C)-Reaktionspartners plus des 1,3-bis-(2-Hydroxiethoxi)-benzols und der anderen esterbildenden organischen Dihydroxi-Kohlenwasserstoff-Reaktionspartner nicht über 90 Mol.% des (A)-Reaktionspartners liegt.

## Revendications

1. Procédé pour fournir une étiquette en matière plastique hautement imperméable sur un récipient creux en polyester possédant une surface extérieure de paroi en polyester, caractérisé par les étapes qui consistent à:

(A) former une couche adhésive en copolyester hautement imperméable, thermoactivable, sur la surface intérieure d'un film d'étiquetage de faible perméation pour former une étiquette,

(B) former un récipient en polyester comportant un corps et une surface extérieure de paroi en polyester, et

(C) chauffer l'étiquette et le récipient pour ramollir la couche de copolyester suffisamment pour qu'elle se colle à la paroi en polyester et former une liaison adhésive dans une zone frontière, entre la couche et la paroi.

2. Procédé selon la revendication 1, dans lequel la couche adhésive en copolyester est activée lorsque le récipient est soufflé.

3. Procédé selon la revendication 1 ou 2, dans lequel le récipient est formé par moulage par extrusion-soufflage ou par moulage par injection-soufflage.

4. Procédé selon l'une quelconque des revendications 1 à 3, dans lequel la couche hautement imperméable est formée sur une préforme qui est ensuite mise en forme de récipient.

5. Procédé selon l'une quelconque des revendications 1 à 4, dans lequel le chauffage de l'étape (B) se fait à environ 100°C—250°C.

6. Procédé selon l'une quelconque des revendications 1 à 5, dans lequel le chauffage de l'étape (B) ramollit le copolyester et thermodurcit simultanément la paroi latérale en polyester.

7. Procédé selon l'une quelconque des revendications 1 à 6, dans lequel le polyester est un poly-(téréphtalate d'éthylène) et le copolyester est un produit de réaction d'acide isophthalique, d'éthylèneglycol et de 1,3-bis(2-hydroxyéthoxy)benzène.

8. Procédé selon l'une quelconque des revendications 1 à 7, dans lequel la paroi latérale en polyester a une épaisseur d'environ 0,375 à 0,75 mm (15 à 30 mils) et le copolyester a une épaisseur d'environ 2,5 × $10^{-3}$ à 0,025 mm (1/10 à 1 mil).

9. Procédé pour fournir une étiquette en matière plastique hautement imperméable sur la paroi latérale de la partie corps d'un récipient en poly(téréphtalate d'éthylène), caractérisé par les étapes qui consistent à:

(A) former une étiquette en copolyester thermoplastique solide autour de la paroi latérale du corps du récipient, l'étiquette renfermant une couche de copolyester qui est en contact avec la paroi latérale, le copolyester étant un produit de réaction

(1) d'un dérivé d'acide phtalique dicarboxylique et

(2) d'éthylèneglycol et de 1,3-bis(2-hydroxyéthoxy)benzène, le copolyester ayant une viscosité inhérente d'au moins environ 0,6, une température de transition vitreuse d'environ 60 à 75°C, une perméabilité à l'oxygène d'environ 4,5—27·$10^{-12}$ $cm^3$·mm/$cm^2$·s·kPa (1—6 $cm^3$/mil/100 pouce$^2$·jour·atm) et une perméabilité à $CO_2$ d'environ 22,5—45·$10^{-12}$ $cm^3$·mm/$cm^2$·s·kPa (5—10 $cm^2$/mil/100 pouce$^2$·jour·atm); et

(B) chauffer l'étiquette et le récipient à au moins environ 100°C pour ramollir l'étiquette pour former une liaison adhésive dans une zone frontière entre l'étiquette et la paroi latérale du récipient.

10. Procédé selon la revendication 9, dans lequel il y a une étape de formation d'une couche extérieure perméable sur le copolyester qui devient la couche extérieure de l'étiquette formée autour du récipient.

11. Procédé pour fournir une étiquette en plastique multicouche hautement imperméable sur un récipient creux en poly(téréphtalate d'éthylène) orienté biaxialement, possédant une paroi latérale autour de sa partie corps, caractérisé en ce que l'étiquette comprend une couche de copolyester imperméable et une couche perméable sur laquelle on peut imprimer des signes; le copolyester étant un copolyester thermoplastique solide comprenant le produit de réaction polymère.

(A) d'un ou de plusieurs réactif(s) choisi(s) parmi l'acide isophtalique, l'acide téréphtalique et leurs esters d'alkyle en $C_1$ à $C_4$, et tout mélange de ceux-ci en toute proportion;

(B) de réactifs, le 1,3-bis(2-hydroxyéthoxy)benzène et l'éthylèneglycol, et éventuellement d'un ou plusieurs autres réactif(s) hydrocarboné(s) organique(s) dihydroxylé(s) formant des esters, et éventuellement,

(C) d'un réactif, la bis(4-β-hydroxyéthoxyphényl)sulfone, dans lequel

(1) la quantité du 1,3-bis(2-hydroxyéthoxy)benzène est de 5 à 90% en moles de la quantité des réactifs (A),

(2) la quantité combinée des réactifs (B) et (C) est d'environ 110 à 300% en moles de la quantité des réactifs (A),

(3) la quantité d'autre(s) réactif(s) hydrocarboné(s) organique(s) dihydroxylé(s) formant des esters est de zéro à 20% en moles de la quantité des réactifs (A), et

(4) la quantité combinée du réactif (C) et du 1,3-bis-(2-hydroxyèthoxy)benzène et d'autre(s) réactif(s) hydrocarboné(s) organique(s) dihydroxylé(s) formant des esters n'est pas supérieure à 90% en moles des réactifs (A);

le procédé comprenant les étapes qui consistent à:

(a) appliquer l'étiquette sur la paroi latérale du récipient de manière que la couche de copolyester soit contre la paroi du récipient, et

(b) chauffer la couche de copolyester de l'étiquette et la paroi latérale au moins environ 25°C au-dessus de la température de transition vitreuse du copolyester pour ramollir la couche de copolyester et la paroi latérale pour former une liaison forte entre elles dans une portion de couche frontière située entre elles.

12. Récipient creux en polyester ou en copolyester possédant une surace de paroi latérale extérieure, caractérisé en ce qu'une étiquette en matière copolyester hautement imperméable est liée à la surface extérieure de la paroi latérale par une ocuche frontière entre la paroi latérale du récipient et l'étiquette, formée par une couche de copolyester de l'étiquette touchant et adhérant à la surface de la paroi latérale, la matière de l'étiquette en copolyester étant un produit de réaction d'acide isophtalique, d'éthylèneglycol et de 1,3-bis(2-hydroxyéthoxy)benzène.

13. Bouteille creuse en poly(téréphtalate d'éthylène) orienté ayant une paroi latérale généralement cylindrique comportant une surface extérieure, caractérisée en ce qu'une étiquette en copolyester est liée à la paroi latérale, l'étiquette renfermant une couche adhésive de copolyester collée à la paroi latérale, une couche frontière étant présente entre la surface extérieure de la paroi latérale et l'étiquette, le copolyester étant un copolyester thermoplastique solide comprenant le produit de réaction polymère

(A) d'un ou de plusieurs réactif)s) choisi(s) parmi l'acide isophtalique, l'acide téréphtalique et leurs esters d'alkyle en $C_1$ à $C_4$, et tout mélange de ceux-ci en toute proportion;

(B) de réactifs, le 1,3-bis(2-hydroxyéthoxy)benzène et l'éthylèneglycol, et éventuellement d'un ou plusieurs autres réactif(s) hydrocarboné(s) organique(s) dihydroxylé(s) formant des esters, et éventuellement,

(C) d'un réactif, la bis(4-β-hydroxyéthoxyphényl)sulfone, dans lequel

(1) la quantité du 1,3-bis(2-hydroxyéthoxy)benzène constitue de 5 à 90% en moles de la quantité des réactifs (A),

(2) la quantité combinée des réactifs (B) et (C) est d'environ 110 à 300% en moles de la quantité des réactifs (A),

(3) la quantité d'autre(s) réactif(s) hydrocarboné(s) organique(s) dihydroxylé(s) formant des esters est de zéro à 20% en moles de la quantité des réactifs (A), et

(4) la quantité combinée du réactif (C) et du 1,3-bis-(2-hydroxyèthoxy)benzène et d'autre(s) réactif(s) hydrocarboné(s) organique(s) dihydroxylé(s) formant des esters n'est pas supérieure à 90% en moles des réactifs (A).

FIG. 1

PRIOR ART

CO₂

CO₂

ALUMIMUM FOIL

PAPEP BACKING

ADHESIVE

FIG. 2

CO₂

CO₂

HIGH BARRIER LABEL

HIGH BARRIER ADHESIVE

EP 0 190 009 B1

FIG. 3

FIG. 4

2